# EUROPÄISCHE PATENTSCHRIFT

(11) **EP 1 404 096 B1**
(45) Veröffentlichungstag und Bekanntmachung des Hinweises auf die Patenterteilung: **30.01.2008**
(21) Anmeldenummer: 02021493.8
(22) Anmeldetag: 25.09.2002
(51) Int. Cl.: H04M 3/523, H04M 7/00

(54) **Verfahren und Kommunikationsanordnung zum Sammeln von Informationen in über mehrere Vermittlungen eines Kommunikationsnetzes verteilten Callcentern**
Method and communication device for collecting information from call centers distributed in several exchanges of a telecommunication network
Méthode et dispositif de telecommunication pour l'acquisition d'information par des centres d'appels répartis dans plusieurs commutateurs d'une réseau de communications

(43) Veröffentlichungstag der Anmeldung: 31.03.2004
(73) Patentinhaber: Nokia Siemens Networks GmbH & Co. KG, 81541 München (DE)
(72) Erfinder: Henz, Volker, 85764 Oberschleissheim (DE)

(56) Entgegenhaltungen:
- WO-A-01/54388
- US-A- 6 157 636

## Beschreibung

Die Erfindung betrifft ein Verfahren zum Sammeln von Informationen in zumindest einem über mehrere Vermittlungen eines Kommunikationsnetzes verteilten Callcenter, wobei die Agentenendgeräte des zumindest einen Callcenters über ein Datennetz jeweils an eine mit den betroffenen Vermittlungen und dem Datennetz verbundene Anpassungseinheit angeschlossen sind und über eine Zugangsprozedur in das zumindest eine Callcenter einbezogen werden.

Den Agentenendgeräten eines Callcenters sind jeweils Agenten zugeordnet, die an das Callcenter gerichtete Anrufe, insbesondere Telefonanrufe, entgegennehmen können. Die Agenten des Callcenters üblicherweise über ein Datennetz mit dem Callcenter verbindbar sind, werden über dieses Datennetz auch Sprachinformationen übertragen werden. Für eine derartige Übertragung von Sprachinformationen über ein Datennetz - insbesondere ein gemäß dem Internetprotokoll ausgestalteten Datennetz - sind die Agentenendgeräte und die Anpassungseinheiten meist nach dem Standard H.323 ausgestaltet.

Die Agenten bzw. Agentenendgeräte werden mit einer Zugangsprozedur in das Callcenter einbezogen. Im Rahmen der Zugriffsprozedur wird zur Identifikation des Agenten üblicherweise die E.164-Rufnummer des Agentenendgerätes verwendet, die diesem an der betroffenen Vermittlung zugeordnet ist und ein spezielles Passwort verwendet. Durch diese Zugangsprozedur wird der jeweilige Agent bzw. das jeweiligen Agentenendgerät aktiv in das Callcenter einbezogen, d.h. er ist bereit am Callcenter ankommende Anrufe entgegenzunehmen. Mit Hilfe dieser Zugangsprozedur kann sich der Agent bzw. das Agentenendgerät auch vom Callcenter abmelden, d.h. er kann keine Anrufe mehr entgegennehmen.

Bei einem derartigen, über mehrere Vermittlungen sich erstreckenden Callcenter sind Informationen bzw. Daten - beispielsweise Vergebührungsdaten und Statistikdaten bzw. Verkehrsmessdaten - an den Standorten der Vermittlungseinrichtungen zu sammeln, wozu in den jeweiligen Vermittlungseinrichtungen eine zusätzliche Anpassungseinrichtung erforderlich ist. Die Informationen bzw. Daten können an den jeweiligen Standorten der Vermittlungseinrichtungen bzw. Anpassungseinrichtungen kopiert und mit Hilfe der Anpassungseinrichtung an eine zentrale Stelle für eine Weiterverarbeitung dieser Informationen bzw. Daten weitergeleitet werden. Diese Vorgehensweise ist sehr aufwändig und wird von den Betreibern von Kommunikationsnetzen in zunehmendem Maße nicht mehr akzeptiert.

Druckschrift WO 01/54388 A1 beschreibt ein Customer Communication Service System, bei dem mit Hilfe eines Call Processing Network Telefonnetz-Anrufer über ein Telefonnetz mit Telefonnetz-Agenten verbunden werden. Hierbei werden Telefonnetz-Agenten, die an unterschiedlichen Lokalitäten eines Call Centers positioniert sind, über das Telefonnetz mit den Call-Processing Network verbunden. Die Internet-Kunden werden über das Internet mit dem Call-Processing Network verbunden. Dokument US 6 157 636 beschreibt ein System für Erfassung und Überprüfung von Informationen für die Bezahlung von Gebühren, sowie das Erfassung von Billing Informationen und Senden diese Informationen zu eine Service Provider.

Die der Erfindung zugrundeliegende Aufgabe ist darin zu sehen, das Sammeln von Daten bzw. Informationen in einem Callcenter zu verbessern, bei dem das Callcenter über mehrere Vermittlungen bzw. Standorte eines Kommunikationsnetzes verteilt ist und die Agenten über ein Datennetz in das Callcenter einbezogen werden. Die Aufgabe wird durch die kennzeichnenden Merkmale des Patentanspruchs 1 gelöst.

Der wesentliche Aspekt des erfindungsgemäßen Verfahrens ist darin zu sehen, dass in den für den Anschluss von Agenten vorgesehenen Anpassungseinheiten jeweils zusätzlich eine die Informationen des zumindest einen Callcenters bereitstellende Informationsapplikation vorgesehen ist und dass von einem an das Datennetz angeschlossenen Informationsserver über die Zugangsprozedur der Agentenendgeräte eine Verkehrsbeziehung über das Datennetz zur Informationsapplikation hergestellt wird und die bereitgestellten Informationen abgerufen werden. Besonders vorteilhaft kommunizieren die Agentenendgeräte und der Informationsserver über ein Internet gemäß H.323-Standard mit den Anpassungseinheiten der Vermittlungen - Anspruch 2.

Beim erfindungsgemäßen Verfahren wird vorteilhaft in die bereits vorhandene Anpassungseinheit, die für den Anschluss eines Agenten an das Callcenter vorgesehen ist, zusätzlich eine Informationsapplikation implementiert, mit deren Hilfe die Informationen bzw. Daten an den jeweiligen Standort bzw. in den Vermittlungen ggs. gesammelt, zumindest jedoch bereitgestellt werden. Hierdurch können die aufwändigen zusätzlichen Applikationseinheiten für das Sammeln von Informationen entfallen. Da die Agenten über ein Datennetz bzw. das Internet mit den Anpassungseinheiten kommunizieren, kann auch der Informationsserver über dieses Datennetz bzw. Internet mit den Informationsapplikationen in den Anpassungseinrichtungen kommunizieren, wobei hierbei besonders vorteilhaft die Identifikationen des Agenten und die bereits vorhandenen Zugriffseinheiten in den Anpassungseinheiten mitverwendet werden. Durch diese Vorgehensweise wird ein weiterer wirtschaftlicher Vorteil erreicht, da keine zusätzlichen Zugriffseinheiten und aufwändige Übertragung von Informationen an eine zentrale Einrichtung erforderlich sind.

Weitere vorteilhafte Ausgestaltungen des erfindungsgemäßen Verfahrens sowie eine erfindungsgemäße Ausgestaltung einer Kommunikationsanordnung sowie vorteilhafte Ausgestaltungen dieser Kommunikationsanordnung sind den weiteren Ansprüchen zu entnehmen.

Im folgenden wird das erfindungsgemäße Verfahren anhand einer Zeichnung näher erläutert.

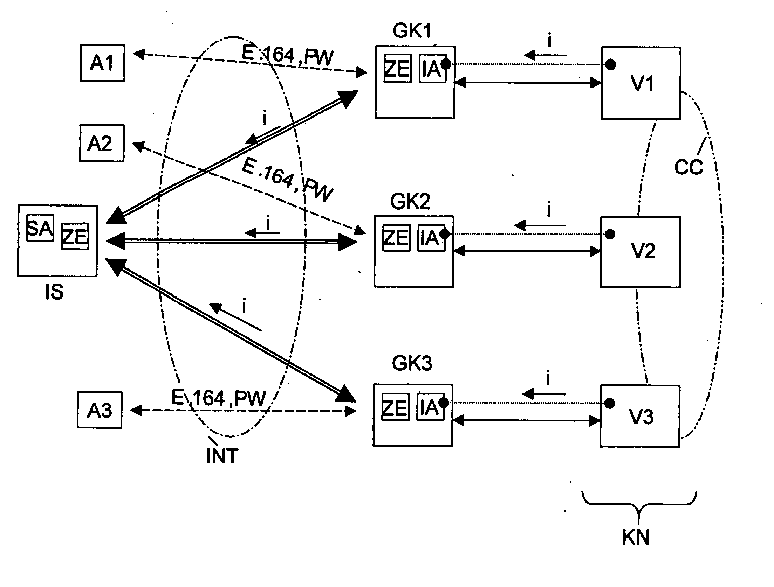

Die Figur zeigt ein Kommunikationsnetz KN, dass durch mehrere Vermittlungseinrichtungen V, in der Figur sind beispielsweise drei Vermittlungseinrichtungen V1...V3 dargestellt, gebildet ist. Bei den Vermittlungseinrichtungen V1...V3 handelt es sich beispielsweise um zeitmultiplexorientierte Fernsprechvermittlungen, an die analoge und digitale Fernsprechendgeräte angeschlossen sind. Die Vermittlungseinrichtungen V1...V3 sind mit Anpassungseinheiten GK1...GK3 verbunden, mit deren Hilfe die Vermittlungseinrichtungen V1...V3 mit dem Internet IMT verbunden werden können. Diese Anpassungseinheiten GK1... GK3 sind in der Fachwelt auch als Gatekeeper bekannt und sind durch meist durch speziell ausgestaltete Rechner realisiert. Besonders vorteilhaft sind die Anpassungseinheiten GK1..GK3 nach H.323-Standard für die Übertragung von Sprachinformationen über das Internet (Voice over IP) realisiert.

Für das Ausführungsbeispiel sei angenommen, dass ein Callcenter CC eines Kunden beispielsweise einer Firma sich über die drei dargestellten Vermittlungseinrichtungen V1...V3 erstreckt - in der Figur durch ein mit CC bezeichnetes, strichpunktiertes Oval angedeutet - und an jedem der Standorte der Vermittlungseinrichtungen V1...V3 jeweils Agentenendgeräte A - beispielhaft ist jeweils ein Agentenendgerät A1..A3 für jeden der Standorte dargestellt - des Callcenters CC über ein Datennetz an die Vermittlungseinrichtungen V1...V3 angeschlossen sind.

Besonders vorteilhaft sind die Agentenendgeräte A1..A3 des Callcenters CC über das Internet INT angeschlossen, dass gemäß dem Standard H.323 ausgestaltet ist. Dies bedeutet, dass an das Callcenter CC vermittelte Anrufe von Fernsprechteilnehmern über die jeweilige Anpassungseinrichtung GK1..GK3 und anschließend über das Internet zu dem jeweiligen Agentenendgerät A1..A3 gesteuert werden können. Die Agentenendgeräte A1..A3 können beispielsweise durch mit Mitteln zur Sprachkommunikation ausgestattete, spezielle Personal Computer sein. Die Zuordnung der Agentenendgeräte A1..A3 zu den jeweiligen Eingängen - beispielsweise standardisierte V5.2-Eingänge - der Vermittlungseinrichtungen V1..V3 wird durch die Administrierung der E.164 Rufnummer der Agentenendgeräte A1..A3 durchgeführt, d.h. jedem Agentenendgerät A1..A3 wird eine kommunikationsnetzgemäße E.164-Rufnummer zugeordnet.

In den Anpassungseinheiten GK1...GK3 ist für die jeweiligen Agentenendgräte A1..A3 eine Zugangseinheit ZE vorgesehen, mit deren Hilfe der an das Internet INT angeschlossene Agent A1..A3 die Zugangsprozedur abwickelt - in der Fachwelt ist diese Zugangseinheit ZE auch als MAC (Medium Access Control) Einheit bekannt. Im Rahmen der Zugangsprozedur loggt sich das entsprechende Agentenendgerät A1..A3 bei der jeweiligen Zugangseinheit ZE ein bzw. gibt seine entsprechende E.164 Rufnummer und das entsprechende Passwort PW an. Nach dem Abwickeln dieser Zugangsprozedur ist das jeweilige Agentenendgerät A1..A3 bzw. der jeweilige Agent für die Annahme von an das Callcenter CC gerichteten Anrufen bzw. Verbindungen bereit. Die Auswahl des Agentenendgerätes A1..A3 bzw. Agenten hängt hierbei von unterschiedlichsten Kriterien wie beispielsweise Agentenendgerät bzw. Agent ist frei oder der Agent hat ein spezifisches Wissen ab.

Das erfindungsgemäße Verfahren basiert auf dieser Netzkonfiguration für den Anschluss von Agentenendgeräten A1...A3 über das Internet INT an die jeweiligen Vermittlungseinrichtungen V1...V3 bzw. an das Callcenter CC, das über diese drei Vermittlungseinrichtungen V1...V3 verteilt ist. Dieses Callcenter CC kann beispielsweise einer Business Croup bzw. einer Firma zugeordnet sein.

Das wesentliche Ziel des erfindungsgemäßen Verfahrens ist es, Informationen i, die für das Callcenter CC oder auch für andere, nicht dargestellte jedoch gleichartig ausgestaltete Callcenter in den jeweiligen Vermittlungseinrichtungen V1...V3 entstehen, zentral zu sammeln. Diese Informationen i sind insbesondere Vergebührungsdaten, die aufgrund von Verbindungen, die von Fernsprechendgeräten über die Vermittlungen V1...V3 zu den jeweiligen Agentenendgeräten A1..A3 aufgebaut sind, in den jeweiligen Vermittlungseinrichtungen V1...V3 erzeugt werden. Weitere Informationen stellen Statistikdaten und Verkehrsmessdaten dar, die für das jeweilige Callcenter CC ermittelt und aufgezeichnet werden. Erfindungsgemäß werden diese Informationen i von der jeweiligen Vermittlungseinrichtung V1...V3 an eine Informationsapplikation IA übermittelt, die in der jeweiligen, zugeordneten Anpassungseinheit GK1...GK3 implementiert ist. In dieser Informationsapplikation werden die von den jeweiligen Vermittlungen V1..V3 übermittelten Informationen i gesammelt und zwischengespeichert.

Erfindungsgemäß ist des weiteren ein Informationsserver IS vorgesehen, der an das Internet INT angeschlossen ist. In dem Informationsserver IS ist ebenfalls eine Zugangseinheit ZE vorgesehen, mit deren Hilfe eine logische Verbindung zur Zugangseinheit ZE der Anpassungseinheiten GK1...GK3 aufgebaut werden kann - in der Figur durch einen doppellinigen Doppelpfeil angedeutet. Des weiteren ist in dem Informationsserver IS eine Sammelapplikation SA vorgesehen, mit deren Hilfe die in den Informationsapplikationen IA der Anpassungseinheiten GK1..GK3 zwischengespeicherten Informationen i abgerufen werden können. Hierzu wird zuerst mit Hilfe der Zugangseinheiten ZE im Informationsserver bzw. in den Anpassungseinheiten GK1...GK3 eine logische Verbindung zwischen,dem Informationsserver IS und einer der Anpassungseinrichtungen GK1...GK3 aufgebaut, wobei zur Identifikation jeweils die Zugangsprozedur der dieser Anpassungseinheit GK1...GK3 zugeordneten Agentenendgeräte A1...A3 verwendet wird. Dies bedeutet, dass die jeweilige E.164-Rufnummer und das jeweilige Passwort PW für den Zugang zu dieser Anpassungseinheit GK1...GK3 verwendet wird. Im Unterschied zur Zugangsprozedur der Agenten A1...A3 wird nicht der jeweiligen Vermittlungseinrichtung V1...V3 mitgeteilt, dass der jeweilige Agent A1...A3 wieder aktiv in das Callcenter CC einbezogen werden kann, sondern mit Hilfe der Sammelapplikation SA wird nun die jeweilige Informationsapplikation IA angesteuert und durch einen speziellen Abrufbefehl werden die dort gespeicherten Informationen i abgerufen und zu dem Informationsserver IS über das Internet INT übertragen. Mit Hilfe der Sammelapplikation SA werden im Informationsserver IS die übermittelten Informationen für das gesamte Callcenter CC und auch gegebenenfalls für weitere, nicht dargestellte Callcenter CC zentral gesammelt und gespeichert. Weitere Bearbeitungs- oder Bewertungsprogramme bzw. Applikationen können im Informationsserver selbst oder in weiterverarbeitenden Servern realisiert sein.

Mit Hilfe des erfindungsgemäßen Verfahrens können folglich in vorteilhafter Weise die bereits vorhandenen Komponentenbeispielsweise die Anpassungseinrichtungen GK und das Internet INT - eines über mehrere Vermittlungen sich erstreckenden Callcenters CC genutzt werden, um die in den Vermittlungen V für das Callcenter CC anfallenden Informationen i bzw. Daten ggs. lokal zu sammeln und an einen zentralen Informationsserver IS zu übermitteln. Dies bedeutet, dass das ggs. lokale Sammeln von in Vermittlungen für Callcenter anfallenden Informationen i und deren Übermitteln an eine Zentrale mit geringstem zusätzlichem Aufwand und damit besonders wirtschaftlich durchgeführt werden kann.

## Patentansprüche

1. Verfahren zum Sammeln von Informationen (i) in zumindest einem über mehrere Vermittlungen (V1..V3) eines Kommunikationsnetzes (KN) verteilten Callcenter (CC), wobei die Agenten (A1..A3) des zumindest einen Callcenters über ein Datennetz (INT) jeweils an eine mit den betroffenen Vermittlungen (V1..V3) und dem Datennetz (INT) verbundene Anpassungseinheit (GK1) angeschlossen sind und über eine Zugangsprozedur in das zumindest Callcenter (CC) einbezogen werden,
**dadurch gekennzeichnet,**
**dass** in den Anpassungseinheiten (GK1..GK3) jeweils zusätzlich eine die Informationen (i) des zumindest einen Callcenters (CC) bereitstellende Informationsapplikation (IA) vorgesehen ist,
**dass** von einem an das Datennetz (INT) angeschlossenen Informationsserver IS) über die Zugangsprozedur der Agentenendgeräte (A1. .A3) eine Verkehrsbeziehung über das Datennetz (INT) zur Informationsapplikation (IA) hergestellt wird und die bereitgestellten Informationen (i) abgerufen werden.

2. Verfahren nach Anspruch 1, **dadurch gekennzeichnet,**
**dass** die Agenten (A1..A3) und der Informationsserver (i) über ein Internet gemäß H.323-Standard mit den Anpassungseinheiten (GK1..GK3) der Vermittlungen (V1..V3) kommunizieren.

3. Verfahren nach Anspruch 1 oder 2, **dadurch gekennzeichnet,**
**dass** im Sinne der Zugangsprozedur der jeweilige Agent (A1..A3) bei der Anpassungseinheit (GK1..GK3) eingeloggt wird und anschließend vom Informationsserver (IS) bei der Informationsapplikation (IA) die bereitgestellten Informationen (i) abgefragt werden.

4. Verfahren nach Anspruch 3, **dadurch gekennzeichnet,**
**dass** für das Einloggen eines Agenten die E.164 Rufnummern und ein Passwort (PW) vorgesehen sind.

5. Kommunikationsanordnung zum Sammeln von Informationen (i) in zumindest einem über mehrere Vermittlungen (V1..V3) eines Kommunikationsnetzes (KN) verteilten Callcenters (CC), wobei die Agenten des Callcenters (CC) über ein Datennetz (INT) jeweils an eine mit den betroffenen Vermittlungen (V1..V3) und dem Datennetz (INT) verbundene Anpassungseinheit (GK1..GK3) angeschlossen sind und über eine Zugangsprozedur in das Callcenter (CC) einbezogen werden,
**dadurch gekennzeichnet,**
**dass** in den Anpassungseinheiten (GK1..GK3) jeweils zusätzlich eine die Informationen (i) des Callcenters (CC) bereitstelsende Informationsapplikation (IA) vorgesehen ist,
**dass** an das Datennetz (INT) ein Informationsserver (IS) zum Abrufen der bereitgestellten Informationen (i) in der Informationsapplikation (IA) angeschlossen ist, wobei mit Hilfe der Zugangsprozedur der Agenten (A1..A3) eine Verkehrsbeziehung vom Informationsserver (IS) über das Datennetz (INT) zur Informationsapplikation (IA) hergestellt wird.

6. Kommunikationsanordnung nach Anspruch 5, **dadurch gekennzeichnet,**
**dass** das Datennetz (INT) durch ein Internet gemäß H.323-Standard realisiert ist.

7. Verfahren oder Kommunikationsanordnung nach einem der vorhergehenden Ansprüche, **dadurch gekennzeichnet,**
**dass** die Informationen (i) durch Gebühreninformationen oder Administrationsinformationen oder Verkehrinformationen oder Statistikinformationen repräsentiert sind.

8. Verfahren oder Kommunikationsanordnung nach einem der vorhergehenden Ansprüche, **dadurch gekennzeichnet,**
**dass** das Kommunikationsnetz (KN) und die Vermittlungen (V1..V3) als zeitmultiplexorientiertes Kommunikationsnetz (KN) und als zeitmultiplexorientierte Vermittlungen (v1..V3) realisiert sind.

## Claims

1. Method for collecting information (i) in at least one call centre (CC) which is distributed over a plurality of exchanges (V1..V3) of a communication network (KN), wherein the agents (A1..A3) of the at least one call centre are connected via a data network (INT) in each case to an adapter unit (GK1) which is connected to the relevant exchanges (V1..V3) and to the data network (INT), and are included in the at least one call centre (CC) via an access procedure,
**characterised in that**
an information application (IA) which makes available the information (i) of the at least one call centre (CC) is additionally provided in each case in the adapter units (GK1..GK3), and that
using the access procedure of the agent terminals (A1..A3), a traffic relation via the data network (INT) to the information application (IA) is established from an information server (IS) which is attached to the data network (INT), and the information (i) which has been made available is requested.

2. Method according to claim 1, **characterised in that**
the agents (A1..A3) and the information server (IS) communicate with the adapter units (GK1..GK3) of the exchanges (V1..V3) via an Internet in accordance with the H.323 standard.

3. Method according to claim 1 or 2, **characterised in that**
within the context of the access procedure, the relevant agent (A1..A3) is logged in to the adapter unit (GK1..GK3) and the information (i) which has been made available is then requested from the information application (IA) by the information server (IS).

4. Method according to claim 3, **characterised in that**
the E.164 call numbers and a password (PW) are provided for the login of an agent.

5. Communications arrangement for collecting information (i) in at least one call centre (CC) which is distributed over a plurality of exchanges (V1..V3) of a communication network (KN), wherein the agents of the call centre (CC) are connected via a data network (INT) in each case to an adapter unit (GK1..GK3) which is connected to the relevant exchanges (V1..V3) and to the data network (INT), and are included in the call centre (CC) via an access procedure,
**characterised in that**
an information application (IA) which makes available the information (i) of the call centre (CC) is additionally provided in each case in the adapter units (GK1..GK3), and that
an information server (IS) is connected to the data network (INT) in order to request the information (i) which is made available in the information application (IA), wherein a traffic relation is established, using the access procedure of the agents (A1..A3), from the information server (IS) via the data network (INT) to the information application (IA).

6. Communications arrangement according to claim 5,
**characterised in that**
the data network (INT) is realised by means of an Internet in accordance with the H.323 standard.

7. Method or communications arrangement according to one of the preceding claims, **characterised in that**
the information (i) is represented by billing information or administration information or traffic information or statistical information.

8. Method or communications arrangement according to one of the preceding claims, **characterised in that**
the communication network (KN) and the exchanges (V1..V3) are realised as a communication network (KN) which is based on time-division multiplexing and as exchanges (V1..V3) which are based on time-division multiplexing.

## Revendications

1. Procédé pour collecter des informations (i) dans au moins un centre d'appel (CC) réparti sur plusieurs commutateurs (V1..V3) d'un réseau de communication (KN), les agents (A1..A3) de l'au moins un centre d'appel étant raccordés par un réseau de données (INT) à chaque fois à une unité d'adaptation (GK1) reliée aux commutateurs (V1..V3) concernés et au réseau de données (INT) et étant intégrés par une procédure d'accès dans l'au moins un centre d'appel (CC),
**caractérisé en ce que**
à chaque fois en supplément une application d'information (IA) mettant à disposition les information (i) de l'au moins un centre d'appel (CC) est prévue dans les unités d'adaptation (GK1..GK3),
**en ce qu'**un serveur d'information (IS) raccordé au réseau de données (INT) établit par la procédure d'accès des terminaux d'agents (A1..A3) une liaison de trafic par le réseau de données (INT) avec l'application d'information (IA) et les informations (i) mises à disposition sont appelées.

2. Procédé selon la revendication 1, **caractérisé en ce que** les agents (A1..A3) et le serveur d'informations (i) communiquent par un Internet selon le standard H.323 avec les unités d'adaptation (GK1..GK3) des commutateurs (V1..V3).

3. Procédé selon la revendication 1 ou 2, **caractérisé en ce que**
l'agent concerné (A1..A3) est connecté à l'unité d'adaptation (GK1..GK3) dans le sens de la procédure d'accès et les informations (i) mises à disposition sont extraites ensuite par le serveur d'information (IS) auprès de l'application d'information (IA).

4. Procédé selon la revendication 3, **caractérisé en ce que** les numéros d'appel E.164 et un mot de passe (PW) sont prévus pour la connexion d'un agent.

5. Dispositif de communication pour collecter des informations (i) dans au moins un centre d'appel (CC) réparti sur plusieurs commutateurs (V1..V3) d'un réseau de communication (KN), les agents du centre d'appel (CC) étant raccordés par un réseau de données (INT) à chaque fois à une unité d'adaptation (GK1..GK3) reliée aux commutateurs (V1..V3) concernés et au réseau de données (INT) et sont intégrés par une procédure d'accès dans le centre d'appel (CC),
**caractérisé en ce que**
à chaque fois en supplément une application d'information (IA) mettant à disposition les informations (i) du centre d'appel (CC) est prévue dans les unités d'adaptation (GK1..GK3),
**en ce qu'**un serveur d'information (IS) destiné à l'extraction des informations (i) mises à disposition dans l'application d'information (IA) est raccordé au réseau de données (INT), une liaison de trafic étant établie à l'aide de la procédure d'accès des agents (A1 ..A3)du serveur d'information (IS) à l'application d'information (IA) via le réseau de données (INT).

6. Dispositif de communication selon la revendication 5, **caractérisé en ce que**
le réseau de données (INT) est réalisé par un Internet selon le standard H.323.

7. Procédé ou dispositif de communication selon l'une quelconque des revendications précédentes, **caractérisé en ce que** les informations (i) sont représentées par des informations de taxation ou des informations d'administration ou des informations de trafic ou des informations de statistique.

8. Procédé ou dispositif de communication selon l'une quelconque des revendications précédentes, **caractérisé en ce que** le réseau de communication (KN) et les commutateurs (V1..V3) sont réalisés sous forme de réseau de communication (KN) orienté multiplexage temporel et sous forme de commutateurs (V1..V3) orientés multiplexage temporel.
